# EUROPEAN PATENT APPLICATION

(11) **EP 1 230 974 A1**
(43) Date of publication of application: **14.08.2002**
(21) Application number: 02002527.6
(22) Date of filing: 04.02.2002
(51) Int. Cl.: B01J 8/02, B01J 8/04, C01B 3/16, C01B 3/58, H01M 8/06

(54) **Catalytic reactor with U-Tubes for improved heat transfer**

(30) Priority: 08.02.2001 US 781018
(71) Applicant: Ballard Generation Systems Inc., Burnaby, B.C. V5A 2X2 (CA)
(72) Inventor: Chong, Patricia, S., Burnaby, British Columbia V3N 5B7 (CA); Sterenberg, David, J., Vancouver, British Columbia V5A 2W7 (CA); Kutty, Jitesh, British Columbia V7R 2P5 (CA); Berkley, Jeffrey A., Brackendale, British Columbia VON 2X2 (CA); Bogacki, Andrzej, W., Port Moody, British Columbia V3H 3Z5 (CA)
(74) Representative: Patentanwälte Ruff, Wilhelm, Beier, Dauster & Partner

(57) **Abstract**

In an apparatus and method for improved operation of a catalytic reactor, a preferred reactor comprises a vessel (10) having concentric first (35) and second annular catalyst beds (40). Heat transfer fluid flows through expandable heat transfer U-tubes (45) passing through the catalyst beds, either concurrently or countercurrently with respect to the flow of process gas through the catalyst beds. This arrangement delivers improved heat transfer between the process and heat transfer fluids and allows the heat transfer U-tubes (45) to expand longitudinally to withstand the pressure differential between the process gas and heat transfer fluids.

## Description

### Field of the Invention

The present invention relates to catalytic reactors. In particular, the invention relates to catalytic reactors with U-tubes for improved heat transfer.

### Background of the Invention

Electrochemical fuel cells convert fuel and oxidant to electricity and reaction product. In electrochemical fuel cells employing hydrogen as the fuel and oxygen as the oxidant, the reaction product is water. Recently, efforts have been devoted to identifying ways to operate electrochemical fuel cells using other than pure hydrogen as the fuel.

Fuel processing for solid polymer fuel cells involves several chemical reactions which may generate or absorb heat energy. It is desirable to provide a heat exchanging apparatus for such reactions which has fewer components, is more versatile, and is better able to withstand pressure differences between reactants fluids and coolant fluids than are conventional heat exchanging reactors.

Recent efforts have focused on the use of hydrogen obtained from the chemical conversion of hydrocarbon fuels to hydrogen. However, to be useful for fuel cells and other similar hydrogen-based chemical applications, hydrocarbon fuels must be efficiently converted to relatively pure hydrogen with a minimal amount of undesirable chemical byproducts, such as carbon monoxide.

Conversion of hydrocarbons to hydrogen is generally accomplished through the steam reformation of a hydrocarbon such as natural gas (methane) or methanol in a reactor sometimes referred to as a reformer. The steam reformation of methane may be represented by the following chemical equations:

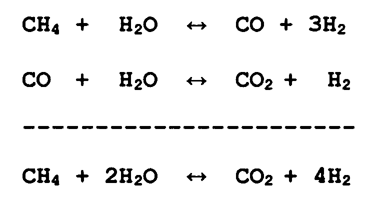

The initial gaseous mixture (reformate) produced by steam reformation of methane will contain small amounts of carbon monoxide. Water vapor will also be present in the reformate.

In low-temperature, hydrogen-based fuel cell applications, the presence of carbon monoxide in the inlet hydrogen stream, even at the 0.1% to 1% level, is generally unacceptable. In solid polymer fuel cells, the electrochemical reaction is typically catalyzed by an active catalytic material comprising a noble metal such as platinum. Carbon monoxide adsorbs preferentially to the surface of platinum, effectively poisoning the catalyst and significantly reducing the efficiency of the desired electrochemical reaction. Thus, the amount of carbon monoxide in the hydrogen-containing gaseous mixture produced by a steam reformer/shift converter process for use in electrochemical fuel cells should be minimized, preferably to amounts significantly lower than the approximately 1% achieved using conventional steam reformation/shift conversion methods. Generally, carbon monoxide levels should be less than 10 ppm in fuels used in a solid polymer fuel cell.

The carbon monoxide content of the reformate may be reduced by further processing of the reformate in a shift reactor, also called a shift converter. The catalyzed reaction occurring in a shift converter is represented by the following chemical equation, sometimes referred to as the water gas shift reaction:

CO + H₂O ↔ CO₂ + H₂ + heat

The conventional water gas shift reactor is an adiabatic catalyst bed through which a process gas containing carbon monoxide is passed. The process gas temperature increases as the amount of carbon monoxide is reduced by the exothermic water gas shift reaction. Due to equilibrium limitations, catalyst activity and catalyst thermal limits, conventional water gas shift reactors are generally incapable of reducing the carbon monoxide concentration of a reformate stream much below 0.8%.

The carbon monoxide concentration of a reformate stream may be further reduced below 0.8% through the use of a second catalyst bed in series with the first catalyst bed. However, because of equilibrium limitations, heat removal from the second catalyst bed is desirable to favour further conversion of carbon monoxide according to the water gas shift reaction. Conventional shift reactors have provided cooling of the catalyst bed through linear heat transfer tubes. Further reduction in carbon monoxide levels may be achieved by selective oxidation of carbon monoxide in another catalyzed reaction.

It is desirable to provide a catalytic reactor design which can accommodate within a single vessel multiple catalytic reactions involving heat transfer.

### Summary of the Invention

A catalytic reactor comprises a reaction chamber comprising at least one catalyst bed, and at least one heat transfer U-tube disposed within the reaction chamber, wherein at least a portion of the tube extends through the catalyst bed.

The catalytic reactor may further comprise a catalyst bed partition within the chamber, the partition defining first and second catalyst beds, wherein a portion of a first arm of the U-tube extends through the first catalyst bed, and a portion of a second arm of the U-tube extends through the second catalyst bed. The partition may be substantially cylindrical, the first catalyst bed disposed within the partition, and the second catalyst bed disposed between the partition and the interior wall of the reaction chamber.

The first and second catalyst beds may comprise different catalysts, and at least one of the first catalyst bed and the second catalyst bed may comprise layers of at least two different catalysts.

The U-shaped heat transfer tube may comprises at least two types of U-shaped heat transfer tubes. First and second arms of each U-shaped heat transfer tube may be substantially parallel, and the distance between parallel first and second arms of a first type of U-shaped heat transfer tube may be greater than the distance between parallel first and second arms of a second type of U-shaped heat transfer tube.

Process gas may be directed from a process gas inlet port in the reactor through the first catalyst bed and then through the second catalyst bed to a process gas outlet port. A heat transfer fluid is directed in the U-shaped heat transfer tube through the first catalyst bed and then through the second catalyst bed.

The catalytic reactor may be a shift reactor, or it may be a combined shift reactor and selective oxidation reactor. The reactor may be a component of a solid polymer fuel cell fuel processing system.

A method of processing a process fluid comprises directing the process fluid through a first annular catalyst bed of a catalytic reactor and directing the effluent from the first annular catalyst bed in a reverse direction through a second annular catalyst bed substantially concentric with the first annular catalyst bed, wherein a heat transfer fluid is simultaneously directed through at least one U-shaped heat transfer tube, a portion of which extends through each of the first and second annular catalyst beds.

The flow direction of the heat transfer fluid may be countercurrent to the flow direction of the process fluid in each of the catalyst beds. The process fluid may be a hydrogen-rich reformate gas stream and the catalytic reactor may be a shift reactor which may be for a solid polymer fuel cell fuel processing system. The heat transfer fluid may comprise cathode vent gas from the solid polymer fuel cell.

### Brief Description of the Drawings

FIG. 1 is a vertical cross section of an annular shift reactor with heat transfer U-tubes.
FIG. 2 is a horizontal cross section of an annular shift reactor with heat transfer U-tubes.
FIG. 3 is a cut away top view of the shift reactor of FIG. 2 showing arrangement of heat transfer U-tubes.
FIG. 4 is a schematic of an integrated catalytic reactor comprising a shift reactor, an internal heat transfer section (intercooler) and a selective oxidizing reactor.

### Detailed Description of Preferred Embodiment(s)

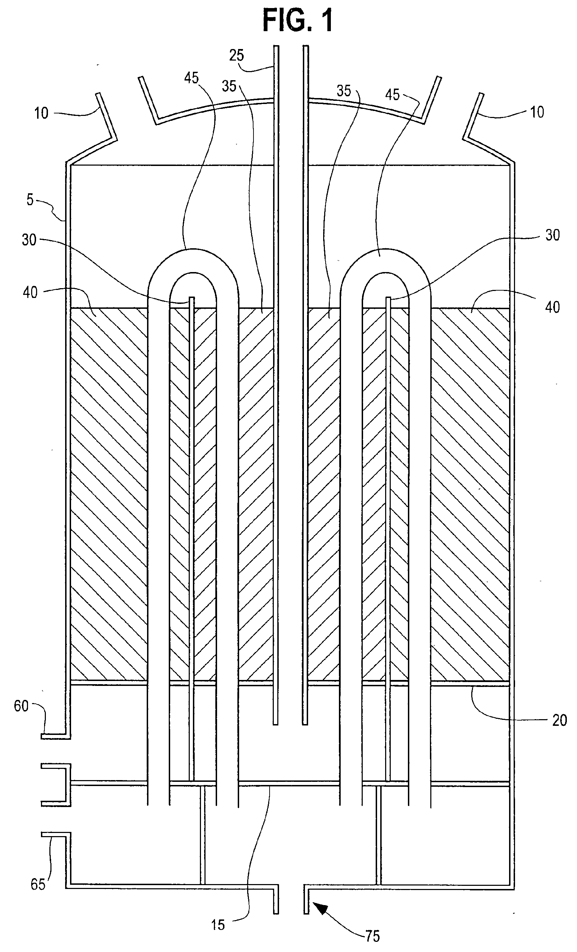

The shift reactor of FIG. 1 comprises a reaction vessel 5 having at least one fill port 10 at its upper end. A tubesheet 15 forms the floor of the reaction chamber. A catalyst bed support 20 is located above tubesheet 15 near the base of reaction vessel 5. A process gas inlet tube 25 extends through the centre of the reactor from the top of the reactor to below catalyst support 20. A concentric partition 30 extends upwardly from tubesheet 15 of the reaction chamber, dividing the reaction chamber into two concentric annular areas which may be filled with one or more catalysts to form inner 35 and outer 40 catalyst beds. Each of a series of inverted U-shaped heat transfer tubes 45 ("U-tubes") extend through both catalyst beds.

In one embodiment, reformate process gas enters vessel 5 through reformate inlet tube 25, passes upwardly through inner annular catalyst bed 35, continues downwardly through outer annular catalyst bed 40, and exits reaction vessel 5 through process gas outlet 60. The process gas passing through the catalyst beds is indirectly cooled by a heat transfer fluid (typically a gas) flowing countercurrently through U-tubes 45 to remove heat of reaction from catalyst beds 35, 40. Heat transfer fluid enters U-tubes 45 through outer annulus port 65, passes upwardly through the portion of U-tubes 45 in outer catalyst bed 40, downwardly through the portion of U-tubes 45 in inner catalyst bed 35, and exits reaction vessel 5 via a central base plenum and outlet port 75. In a solid polymer fuel cell system, the heat transfer fluid may comprise cathode vent gas from the fuel cell cathodes.

In an alternative embodiment, reformate process gas passes first through outer catalyst bed 40 and exits through inner catalyst bed 35. The heat transfer fluid may be directed to flow either concurrently or countercurrently with respect to the reformate process gas flow direction.

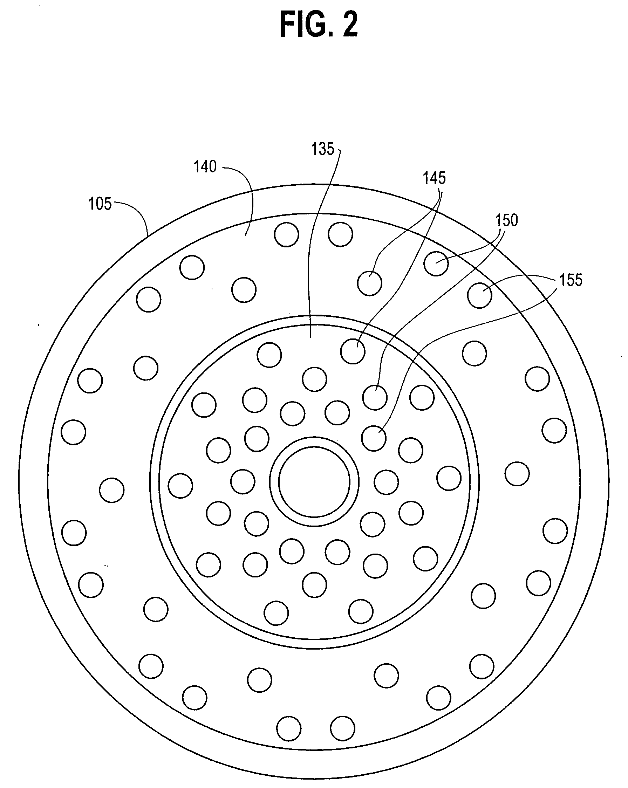

FIG. 2 depicts a horizontal cross-section of an annular U-tube shift reactor. In the embodiment shown, U-tubes 145, 150, 155 of three different arm spans are distributed in a repeating pattern throughout the interior of reactor vessel 105 in order to provide heat exchange as evenly as possible through all areas of catalyst beds 135, 140. A set of narrow-span U-tubes 145 (having a radius of curvature of 1.81 inches (46.0 mm)) extends between the outer portion of inner catalyst bed 135 and the inner portion of outer catalyst bed 140. A set of medium-span U-tubes 150 (having a radius of curvature of 1.85 inches (47.0 mm)) extends between the middle portion of inner catalyst bed 135 and the outer portion of outer catalyst bed 130. A set of wide-span U-tubes 155 (having a radius of curvature of 2.06 inches (52.3 mm)) extends between the inner portion of inner catalyst bed 135 and the outer portion of outer catalyst bed 140. Other radii of curvature and a higher number of types of U-tubes may also be used, depending on the reaction being catalyzed and other parameters of the reactor.

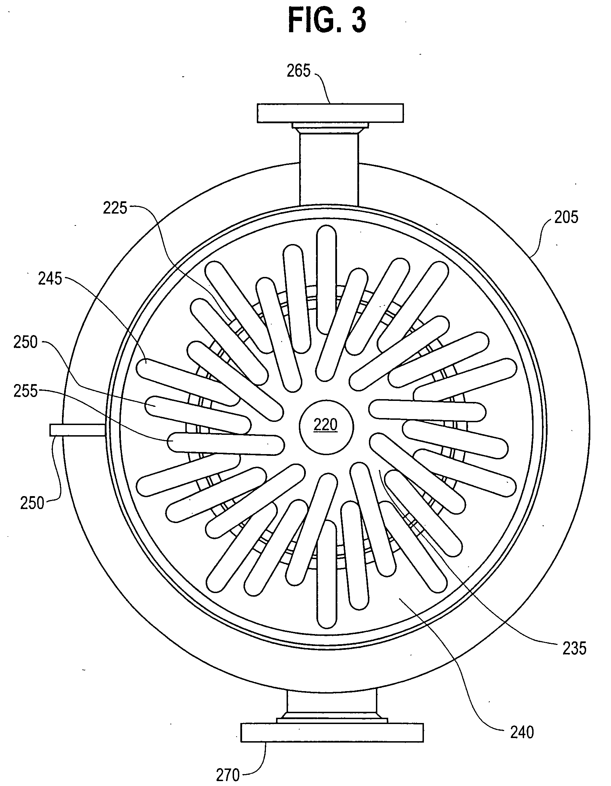

FIG. 3 shows a top view of a similar reactor to that depicted in FIG. 2 with the top of the reactor removed. Three sets of U-tubes 245, 250, 255 are positioned in a repeating pattern across catalyst bed partition 225 in order to improve consistency of heat exchange throughout the catalyst beds. FIG. 3 also depicts outer annulus port 265 and central outlet port 270 through which heat transfer fluid enters and exits reaction vessel 205. Process gas enters and exits vessel 205 through process gas inlet tube 220 and exits through process gas outlet 250 after passing through inner 235 and outer 240 catalyst beds. The direction of flow of the process gas may also be reversed.

There may be a pressure differential between the process gas and the heat transfer fluid of up to 5 psi (34.45 kPa). When only one stream is flowing through the reactor, maximum pressure differential exists between the heat transfer fluid side and the process gas side of the reactor. This is sometimes referred to as "full cross pressure". The shift reactor of FIG. 1 is suitable for pressurized design and permits a heat transfer fluid to be used under full cross pressure. In a conventional shift reactor, heat transfer tubes are linear and require expansion joints to accommodate thermal expansion and resultant elongation during operation. Such expansion joints are expensive and unable to withstand high levels of cross pressure. In the embodiment of FIG. 1, the U-tubes can thermally expand lengthwise without expansion joints, and therefore are better able to withstand full cross pressure.

In preferred embodiments shown in FIGs. 1-3, heat transfer U-tubes are used in a shift reactor. Relative to a conventional shift reactor with linear heat transfer tubes, as the tubes are bent into a U-shape half the number of heat transfer tubes are sufficient to achieve the same heat transfer, increasing the amount of heat transfer per unit cross-sectional flow area. The number of U-tubes and the dimensions of the U-tubes may also be varied to achieve the desired heat transfer for a particular reaction.

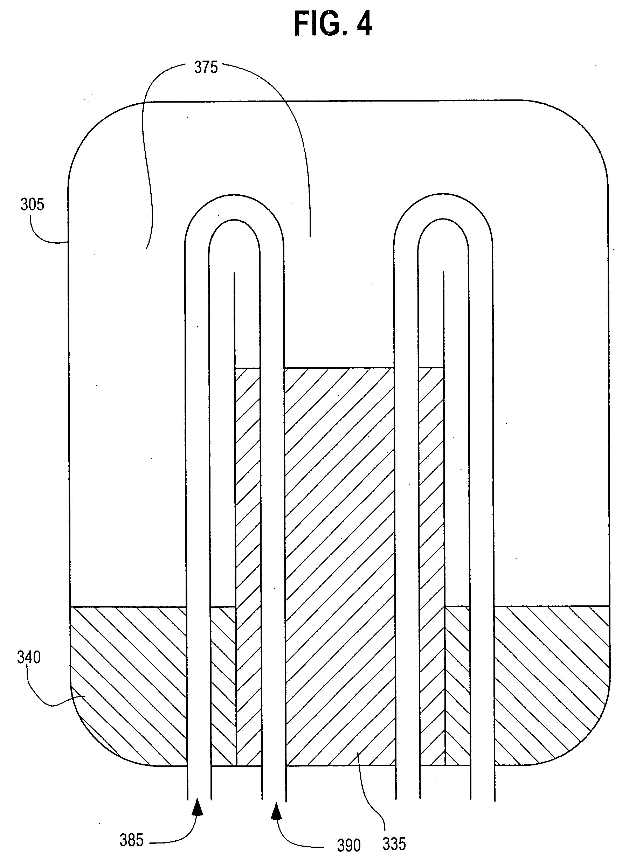

Various other parameters of the annular catalyst beds may be altered to favour particular reactions. Different catalysts may be used in each of the catalyst beds to promote different reactions, and annular bed heights may be varied to adjust heat transfer properties between the catalyst beds. FIG. 4 shows schematically a reaction vessel 305 comprising a first catalyst in inner catalyst bed 335 to promote the shift reaction, no catalyst in an internal heat exchange section, sometimes called an intercooler 375, and a second catalyst in outer catalyst bed 340 to promote a selective oxidation reaction. In this configuration, process gas enters the lower end of inner catalyst bed 335, passes through the shift reaction catalyst in bed 335, intercooler 375, and the selective oxidation catalyst in bed 340 before exiting the lower end of outer catalyst bed 340. Air is introduced into intercooler 375 to promote selective oxidation in outer catalyst bed 340. Heat transfer fluid is directed countercurrently, entering the U-tube outer arm 385 in outer catalyst bed 340 and exiting U-tube inner arm 390 in inner catalyst bed 335. Numerous other arrangements of catalyst beds and internal heat exchange sections may be selected in order to achieve the desired sequence of reactions and temperature control.

In the preferred embodiment of Figs. 2 and 3, the reaction vessel diameter is 18.0 inches (45.7 cm). The concentric partition has a diameter of 10.5 inches (26.7 cm), and the catalyst bed height is 56.0 inches (142.2 cm). 30 U-tubes of 0.75 inches (1.9 cm) diameter are radially dispersed throughout the reaction vessel. The vessel and its components are preferably comprised of stainless steel, as it is resistant to corrosion by the reformate process gas.

Relative catalyst volumes of inner and outer catalyst beds may also be varied by altering the diameter of the catalyst beds by relocation of the concentric partition. In the case of the shift reaction, the reaction occuring in the primary catalyst bed is limited by equilibrium, while the selective oxidation reaction in the secondary catalyst bed is limited by kinetics, favouring a lesser catalyst volume in the primary catalyst bed. However, as the primary catalyst bed volume decreases, the pressure drop through the reactor increases, limiting the extent to which the primary catalyst volume may be less than the secondary catalyst volume.

As the catalyst bed in the shift reactor is of annular design, cross-sectional flow area for the process gases is reduced relative to a non-annular design. The reduction in cross-sectional area flow of the reformate and heat transfer fluids in the same catalyst bed volumes provides better heat transfer on both the hot and cold sides. Cross-sectional flow area for the heat transfer fluid is also reduced as the U-tube reactor heat transfer fluid achieves an equivalent heat transfer while flowing through half the number of tubes relative to a conventional linear tube reactor.

Such an annular reactor configuration with heat transfer U-tubes may be used for various catalytic reactors that require heat transfer. The design of annular catalytic reactors permits layering of multiple distinct catalyst beds facilitated by fill ports at the uppermost end of the reactor vessel. Catalyst compositions may be selected to favour a particular reaction.

While particular elements, embodiments and applications of the present invention have been shown and described, it will be understood, of course, that the invention is not limited thereto since modifications may be made by those skilled in the art, particularly in light of the foregoing teachings. It is therefore contemplated by the appended claims to cover such modifications as incorporate those features that come within the scope of the invention.

## Claims

1. A catalytic reactor comprising:
(a) a reaction chamber comprising at least one catalyst bed; and
(b) at least one heat transfer U-tube disposed within said reaction chamber, wherein at least a portion of said tube extends through said catalyst bed.

2. The catalytic reactor of claim 1 further comprising:
(c) a catalyst bed partition within said chamber, said partition defining first and second catalyst beds, wherein a portion of a first arm of said U-tube extends through said first catalyst bed, and a portion of a second arm of said U-tube extends through said second catalyst bed.

3. The catalytic reactor of claim 2 wherein process gas is directed from a process gas inlet port in said reactor through said first catalyst bed and then through said second catalyst bed to a process gas outlet port.

4. The catalytic reactor of claim 2 or 3 wherein a heat transfer fluid is directed in said at least one U-shaped heat transfer tube through said first catalyst bed and then through said second catalyst bed.

5. The catalytic reactor of any one of claims 2 to 4 wherein said partition is substantially cylindrical, said first catalyst bed is disposed within said partition, and said second catalyst bed is disposed between said partition and the interior surface of said reaction chamber.

6. The catalytic reactor of any one of claims 2 to 5 wherein said first and second catalyst beds comprise different catalysts.

7. The catalytic reactor of any one of claims 2 to 6 wherein at least one of said first catalyst bed and said second catalyst bed comprises layers of at least two different catalysts.

8. The catalytic reactor of any one of claims 1 to 7 wherein said at least one U-shaped heat transfer tube comprises at least two types of U-shaped heat transfer tubes.

9. The catalytic reactor of claim 8 wherein said first and second arms of each U-shaped heat transfer tube are substantially parallel, and the distance between parallel first and second arms of a first type of U-shaped heat transfer tube is greater than the distance between parallel first and second arms of a second type of U-shaped heat transfer tube.

10. The catalytic reactor of any one of claims 1-9 wherein said catalytic reactor is a shift reactor.

11. The catalytic reactor of any one of claims 1-9 wherein said catalytic reactor is a combined shift reactor and selective oxidation reactor.

12. The catalytic reactor of any one of claims 9 and 10 wherein said reactor is a component of a solid polymer fuel cell fuel processing system.

13. A method of processing a process fluid comprising directing said process fluid through a first annular catalyst bed of a catalytic reactor; and directing the effluent from said first annular catalyst bed in a reverse direction through a second annular catalyst bed substantially concentric with said first annular catalyst bed; wherein a heat transfer fluid is simultaneously directed through at least one U-shaped heat transfer tube, a portion of which extends through each of said first and second annular catalyst beds.

14. The method of claim 13 wherein the flow direction of said heat transfer fluid is countercurrent to the flow direction of said process fluid in each of said catalyst beds.

15. The method of claim 13 or 14 wherein said process fluid is a hydrogen-rich reformate gas stream and said catalytic reactor is a shift reactor.

16. The method of claim 15 wherein said shift reactor is a component of a solid polymer fuel cell fuel processing system.

17. The method of claim 16 wherein said heat transfer fluid comprises cathode vent gas from said solid polymer fuel cell.
